(19) Europäisches Patentamt
European Patent Office
Office européen des brevets

(11) **EP 3 575 756 A1**

(12) **EUROPÄISCHE PATENTANMELDUNG**

(43) Veröffentlichungstag:
04.12.2019 Patentblatt 2019/49

(51) Int Cl.:
**G01F 25/00** (2006.01)     **G01F 1/66** (2006.01)
**G01B 13/20** (2006.01)

(21) Anmeldenummer: 18174995.3

(22) Anmeldetag: **30.05.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Huck, Ralf**
**63538 Großkrotzenburg (DE)**

(54) **KALIBRIERUNG EINES DURCHFLUSSMESSGERÄTS**

(57)     Vorgeschlagen wird ein Verfahren zur Ermittlung eines Kalibrierfaktors zur Kalibrierung eines Durchflussmessgeräts (1), welches Durchflussmessgerät (1) dazu ausgebildet ist, in einem ersten Rohrabschnitt (2) eines Rohrs (4) einen Durchfluss eines Fluides durch das Rohr (4) mittels eines ersten Messverfahrens zu ermitteln. Das Verfahren umfasst die folgenden Schritte: i) Ermittlung eines Durchflusses durch das Rohr (4) in einem zweiten, von dem ersten Rohrabschnitt (2) verschiedenen Rohrabschnitt (3) mittels einer Messanordnung (5), die dazu ausgebildet ist, mittels eines zweiten Messverfahrens auf Basis eines Clamp-On Sensors bei einer bekannten Querschnittsfläche des zweiten Rohrabschnitts (3) einen Durchfluss durch den zweiten Rohrabschnitt (3) zu bestimmen; ii) Ermittlung einer ersten Beziehung zwischen dem mittels des ersten Messverfahrens und des zweiten Messverfahrens bestimmten Durchflusses durch das Rohr (4), um einen ersten Kalibrierfaktor für das Durchflussmessgerät (1) zu erhalten.

FIG 1

**Beschreibung**

Die Erfindung betrifft ein Verfahren zur Ermittlung einer Querschnittsfläche eines ersten Rohrabschnitts eines Rohrs nach Anspruch 1. Zudem betrifft die Erfindung ein Verfahren zur Ermittlung eines Kalibrierfaktors zur Kalibrierung eines Durchflussmessgeräts nach Anspruch 3. Außerdem betrifft die Erfindung ein Durchflussmessgerät nach Anspruch 11.

Eine Kalibrierung von Durchflussmessgeräten, die in industriellen Anlagen zum Einsatz kommen, muss regelmäßig überprüft werden. Das im Rahmen einer Erstkalibrierung, die in der Regel vor dem Einbau eines Durchflussmessgeräts in eine industrielle Anlage erfolgt, Durchflussmessgerät unterliegt im Laufe des Betriebs einer gewissen Alterung, was eine regelmäßige Nachkalibrierung bedingt.

Hierzu war es bislang üblich, dass das wiederholt zu kalibrierende Durchflussmessgerät aus der industriellen Anlage ausgebaut wird, um einen in einen externen Prüfzustand einzubauen. Im Rahmen des Kalibriervorgangs wird das Durchflussmessgerät mit einer Referenz verglichen (as found). Eine im Vergleich zur Referenz festgestellte Abweichung wird anschließend in einer charakteristischen Kennlinie des Durchflussmessgeräts korrigiert (as left). Zuletzt muss das Durchflussmessgerät wieder in die Anlage eingebaut werden. Dieser Vorgang wiederholt sich in regelmäßigen Intervallen.

In der DE 103 28 294 A1 ist ein Verfahren zum Kalibrieren eines Ultraschall-Durchflussmessgeräts offenbart. Dieses Verfahren macht einen Ausbau des Durchflussmessgeräts zur Laufzeit der industriellen Anlage überflüssig. Allerdings ist der Aufwand, der zur Ermittlung der Kalibrierdaten vonnöten ist, verhältnismäßig groß. Insbesondere muss eine exakte Querschnittsfläche des Durchflussmessgeräts auf komplexe Art und Weise ermittelt werden.

In der DE 196 05 652 A1 ist ein weiteres Verfahren zur Kalibrierung eines Durchflussmessgeräts offenbart. Dabei wird im Betrieb eines Durchflussmessgeräts eine physikalische, von der Durchflussgeschwindigkeit abhängige Größe gemessen. Dabei wird eine Geometrie eines Messrohrs des Durchflussmessgeräts erfasst und zur Berechnung eines Kalibrierfaktors verwendet.

Der Erfindung liegt die Aufgabe zugrunde, ein Verfahren zur Ermittlung eines Kalibrierfaktors zur Kalibrierung eines Durchflussmessgeräts anzugeben, dass ohne Ausbau des Durchflussmessgeräts durchgeführt werden kann und dass die Aufnahme weiterer für den Durchfluss charakteristischer Messgrößen, die unabhängig vom primären Messverfahren sind und deren Erfassung an dem elektrisch unveränderten Durchflussgerät oder seiner Umgebung möglich ist, ermöglicht.

Hierzu wird ein Verfahren beschrieben, dass eine exakte Bestimmung einer Querschnittsfläche im benachbarten Rohrabschnitt des Durchflussmessgerätes auf vereinfachte Art und Weise ermöglicht.

Diese Aufgabe wird gelöst durch ein Verfahren zur Ermittlung einer Querschnittsfläche eines ersten Rohrabschnitts eines Rohrs nach Anspruch 1.

Außerdem wird die Aufgabe gelöst durch ein Verfahren zur Ermittlung eines Kalibrierfaktors zur Kalibrierung eines Durchflussmessgeräts, welches Durchflussmessgerät dazu ausgebildet ist, in einem ersten Rohrabschnitt eines Rohrs einen Durchfluss eines Fluides durch das Rohr mittels eines ersten Messverfahrens zu ermitteln, nach Anspruch 3.

Zudem wird die Aufgabe gelöst durch ein Durchflussmessgerät nach Anspruch 11.

Vorteilhafte Weiterbildungen ergeben sich aus den abhängigen Ansprüchen.

Bei einem Verfahren der eingangs beschriebenen Art werden erfindungsgemäß die folgenden Verfahrensschritte zur (einmaligen) Bestimmung des unbekannten Rohrquerschnitts in einem zweiten Rohrabschnitt durchgeführt, wobei ein an den zweiten Rohrabschnitt angrenzender erster Rohrabschnitt des Rohrs eine Referenzmessanordnung aufweist, die dazu ausgebildet ist, einen Durchfluss durch den ersten und zweiten Rohrabschnitt zu bestimmen:

   a) Konstantes Durchströmen des ersten und zweiten Rohrabschnitts des Rohrs mit einem Fluid;

   b) Bestimmung des Durchflusses durch den ersten und zweiten Rohrabschnitt des Rohrs mittels der Referenzmessanordnung;

   c) Bestimmung einer Durchflussgeschwindigkeit durch den zweiten Rohrabschnitt mittels einer von der Referenzmessanordnung unabhängigen Messanordnung, die dazu ausgebildet ist, vorzugsweise auf Basis eines Clamp-On Sensors, eine Durchflussgeschwindigkeit durch den zweiten Rohrabschnitt zu bestimmen;

   d) Berechnung einer wirksamen Querschnittsfläche des zweiten Rohrabschnitts als Quotient aus dem mittels der Referenzmessanordnung ermittelten Durchfluss durch den ersten und zweiten Rohrabschnitt und der ermittelten Durchflussgeschwindigkeit in dem zweiten Rohrabschnitt.

Der erste Rohrabschnitt, der an den zweiten Rohrabschnitt angrenzt, kann insbesondere durch das später zu überprüfende Durchflussmessgerät gebildet werden.

Die Bestimmung des Durchflusses durch den ersten und zweiten Rohrabschnitt mittels der Referenzmessanordnung (bzw. dem Durchflussmessgerät) kann zum Beispiel auf Basis eines kalibrierten Clamp-On Sensors oder eines kalibrierten magnetisch-induktiven Durchflussmessers erfolgen.

Die Bestimmung der Durchflussgeschwindigkeit durch den zweiten Rohrabschnitt mittels der von der Referenzmessanordnung unabhängigen Messanordnung kann auf Basis eines kalibrierten Clamp-On Sensors erfolgen.

Das erfindungsgemäße Verfahren macht einen erneuten bzw. wiederholten Ausbau des ersten Rohrabschnitts bzw. des Durchflussmessgeräts im Rahmen einer Kalibrierung zur Laufzeit des Durchflussmessgeräts überflüssig. Hierzu sieht das Verfahren vor, dass die Querschnittsfläche eines (zweiten) Rohrabschnitts, wie oben beschrieben, exakt bestimmt wird. Üblicherweise weisen in industriellen Anlagen eingesetzte Rohre bzw. Rohrabschnitte Toleranzen im Bereich von bis zu fünf Prozentpunkten auf, was die Notwendigkeit einer exakten Bestimmung der Querschnittsfläche belegt.

Die Verwendung eines Clamp-On Sensors oder eines magnetisch-induktiven Durchflussmessers als Referenz bringt einen verhältnismäßig geringen Aufwand mit sich. Bei Verwendung eines Clamp-On Sensors als Referenz reicht sogar die exakte Kenntnis der Querschnittsfläche des Clamp-On Sensors aus, wodurch eine individuelle Kalibrierung der Referenz entfallen kann und der Aufwand zur Vermessung der mittleren wirksamen Fläche des zweiten Rohrabschnitts nochmals in bisher nicht bekannter Weise reduziert wird.

Durch das vorteilhafte Ausnutzen einfacher Verhältnisse der Parameter "Durchfluss" oder der "Querschnittsfläche" kann mit verhältnismäßig einfachen Mitteln auf überraschende Art und Weise eine exakte Bestimmung der Querschnittsfläche des (zweiten) Rohrabschnitts vorgenommen werden. Mittels dieser Querschnittsfläche kann dann später eine effiziente Bestimmung des Durchflusses und eine daraus abgeleitete einfache Kalibrierung des Durchflussmessgeräts vorgenommen werden, worauf im weiteren Verlauf noch näher eingegangen wird.

Die Referenzmessanordnung kann bereits in dem ersten Rohrabschnitt eingebaut sein. Es ist jedoch auch möglich, zur Anordnung der Referenzmessanordnung in dem ersten Rohrabschnitt den ersten Rohrabschnitt auszubauen und die Referenzmessanordnung in dem ersten Rohrabschnitt bzw. zusammen mit dem ersten Rohrabschnitt einzubauen. Nach erfolgter Berechnung der Querschnittsfläche wird der erste Rohrabschnitt mit der Referenzmessanordnung anschließend wieder ausgebaut und der an den zweiten Rohrabschnitt angrenzende erste Rohrabschnitt ohne die Referenzmessanordnung wieder eingebaut.

Die Aufgabe wird zudem gelöst durch ein Verfahren zur Ermittlung eines Kalibrierfaktors zur Kalibrierung eines Durchflussmessgeräts, welches Durchflussmessgerät dazu ausgebildet ist, in einem ersten Rohrabschnitt eines Rohrs einen Durchfluss eines Fluides durch das Rohr mittels eines ersten Messverfahrens zu ermitteln, mit den folgenden Verfahrensschritten:

i) Ermittlung eines Durchflusses durch das Rohr in einem zweiten, von dem ersten Rohrabschnitt verschiedenen Rohrabschnitt mittels einer Messanordnung, die dazu ausgebildet ist, mittels eines zweiten Messverfahrens auf Basis eines Clamp-On Sensors bei einer bekannten Querschnittsfläche des zweiten Rohrabschnitts eine Durchflussgeschwindigkeit durch den zweiten Rohrabschnitt zu bestimmen;

ii) Ermittlung einer ersten Beziehung zwischen dem mittels des ersten Messverfahrens und des zweiten Messverfahrens bestimmten Durchflusses durch das Rohr, um einen ersten Kalibrierfaktor für das Durchflussmessgerät zu erhalten.

Das Kalibrierverfahren macht einen Ausbau des Durchflussmessgeräts im Rahmen einer Kalibrierung zur Laufzeit des Durchflussmessgeräts überflüssig. Die mittels des zweiten Messverfahrens auf Basis eines Clamp-On Sensors ermittelten Messgrößen sind unabhängig von dem ersten, primären Messverfahren, welches das Durchflussmessgerät anwendet. Somit kann durch das zweite, sekundäre Messverfahren eine vom primären Messverfahren unabhängige, externe, auf stabile physikalische Größen rückführbare, d.h. als ein sogenanntes Custody Transfer Normal geeignete, Referenz geschaffen werden. Eine Alterung/ Drift des sekundären Clamp-On Messverfahrens ist durch die temporäre Anwendung minimiert und kann durch separate Prüfung sicher ausgeschlossen werden.

Besonders bevorzugt wird nach Ablauf einer vorherbestimmten Zeitdauer eine zweite Beziehung zwischen dem mittels des ersten Messverfahrens und des zweiten Messverfahrens bestimmten Durchflusses durch das Rohr ermittelt, um einen zweiten Kalibrierfaktor für das Durchflussmessgerät zu erhalten.

Die wiederholte Bestimmung eines Kalibrierfaktors korrigiert eine Alterung/Drift des Durchflussmessgeräts. Der verwendete Clamp-On Sensor selbst unterliegt keiner oder nur einer vernachlässigbaren Alterung, da er nur temporär und nicht dauerhaft genutzt wird.

Die Ermittlung des Durchflusses durch das Rohr in dem zweiten Rohrabschnitt erfolgt genau genommen mittels einer Bestimmung der Durchflussgeschwindigkeit durch den zweiten Rohrabschnitt und einer Multiplikation dieser Durchflussgeschwindigkeit mit einer Querschnittsfläche des zweiten Rohrabschnitts. Die Querschnittsfläche der Messanordnung bzw. die Querschnittsfläche des zweiten Rohrabschnitts wird dabei bevorzugt mittels des erfindungsgemäßen Verfahrens ermittelt.

Dabei kann das Durchflussmessgerät vorteilhafterweise selbst als Referenzmessgerät dienen. Ein Ein- und Ausbau der Referenzmessanordnung ist in diesem Fall nicht notwendig, wodurch sich das Verfahren besonders einfach durchführen lässt.

Alternativ kann die Querschnittsfläche der Messanordnung auch in einem Inneren des zweiten Rohrabschnitts ermittelt werden. Dabei wird vorzugsweise ein Molch verwendet, der zu einer Abtastung einer Innenseite des zweiten Rohrabschnitts ausgebildet ist, um hieraus die Querschnittsfläche der Messanordnung zu bestimmen.

Die Verfahrensschritte i) und ii) werden vorteilhafterweise während der Erstkalibrierung von einem Lieferanten des Durchflussmessgeräts in dessen Einrichtungen und/oder bei einer Inbetriebnahme des Durchflussmessgeräts in der industriellen Anlage eines Kunden durchgeführt.

Eine nochmalige Vereinfachung des Verfahrens ergibt sich, wenn das Durchflussmessgerät selbst als Referenz verwendet wird. Das Durchflussmessgerät kann dann im Rahmen der Inbetriebnahme zur Ermittlung der Querschnittsfläche des zweiten Rohrabschnitts nach obigem Verfahren genutzt werden. Vorteilhaft ist hierbei, dass das Durchflussmessgerät zunächst die Aufgabe des Referenzgerätes übernimmt, dann aber nicht mehr ausgebaut werden muss und in der Anlage verbleiben kann. Der sonst erforderliche Ein- und Ausbau eines unabhängigen Referenzgerätes kann damit entfallen. Das zunächst als Referenzgerät fungierende Durchflussmessgerät stützt sich dabei auf eine aktuelle Werkskalibrierung.

Auf Basis der gemessenen Durchflussgeschwindigkeit und einer bekannten Querschnittsfläche des ersten Rohrabschnitts kann ein Durchfluss des verwendeten Fluids durch das Rohr bestimmt werden. Somit wird auf dem zweiten Rohrabschnitt eine temporäre InSitu-Referenz gebildet, mittels derer sich das Durchflussmessgerät wiederholt kalibrieren lässt, ohne dass es hierfür im laufenden Betrieb der industriellen Anlage ausgebaut werden müsste. Besonders hervorzuheben ist, dass die Kalibrierung in Situ stattfindet, das heißt umgebungs- und einbaubedingte Abweichungen zwischen externer Kalibrierung und Einbauort werden sicher ausgeschlossen.

Die Messtechnik der auf einem temporär montiertem Clamp-On Sensor basierenden Messanordnung unterliegt dabei selbst keiner Alterung, da sie sich nicht dauerhaft in der industriellen Anlage befindet. Daher kann sie zudem unabhängig von Produktionsprozessen eines Kunden in einer externen Kalibrieranlage überprüft werden.

Bei einer weiteren vorteilhaften Weiterbildung des Kalibrierverfahrens werden die folgenden Verfahrensschritte zur Ermittlung der Querschnittsfläche der Messanordnung durchgeführt:

a) Ein Außendurchmesser des zweiten Rohrabschnitts wird mittels eines geeigneten Messgeräts ermittelt;
b) Eine Wandstärke des Rohrs in einem Bereich des zweiten Rohrabschnitts wird ermittelt, insbesondere mittels einer Ultraschallmessung;
c) Eine Querschnittsfläche der Messanordnung wird aus einer Differenz des Außendurchmessers und der Wandstärke des zweiten Rohrabschnitts berechnet.

Bei sauberen Prozessen innerhalb der industriellen Anlage (d.h. keine Anbackungen an den Innenwänden der verwendeten Rohre) sind auch die wirksamen Querschnittsflächen als konstant zu betrachten. Um aber auch mögliche sich verändernde Anbackungen bei wiederholten Überprüfungen des Durchflussmessgeräts miteinzukalkulieren, kann zusätzlich bei der Ermittlung der ersten Beziehung zwischen dem mittels des ersten Messverfahrens und des zweiten Messverfahrens bestimmten Durchflusses durch das Rohr ein Druckwert in dem ersten und zweiten Rohrabschnitt ermittelt werden. Zudem wird zusätzlich bei der Ermittlung der zweiten Beziehung zwischen dem mittels des ersten Messverfahrens und des zweiten Messverfahrens bestimmten Durchflusses durch das Rohr ein Druckwert in dem ersten und zweiten Rohrabschnitt erneut ermittelt.

Hieraus wird mittels eines Vergleichs der Beziehungen zwischen den Druckwerten ein zusätzlicher Kalibrierfaktor bestimmt, der der Tatsache der nicht gegebenenfalls nicht zu vernachlässigenden Anbackungen Rechnung trägt.

Die Berechnung erfolgt dabei auf Basis des folgenden Zusammenhangs (dabei bezeichnet P einen Druck und A eine Querschnittsfläche):

$$P\_Durchflussmessgerät * A\_Rohrabschnitt = P\_Rohrabschnitt * A\_Durchflussmessgerät$$

Nicht korrelierte Anbackungen verändern das als konstant zu erwartende Querschnittsflächenverhältnis von Durchflussmessgerät und Messanordnung im zweiten Rohrabschnitt. Damit kann ein verändertes Druckverhältnis erkannt werden und ein zusätzlicher Kalibrierfaktor für das Durchflussmessgerät ermittelt werden. Gleichförmige Anbackungen im Durchflussmessgerät und in der Messanordnung (die das Verhältnis der Druckwerte trotz Anbackungen konstant werden ließen) sind nicht zu erwarten, da das Durchflussmessgerät und die in dem benachbarten Rohrabschnitt befindliche Messanordnung in der Regel eine stark unterschiedliche Oberflächenstruktur aufweisen, was die Neigung zu Anbackungen unterschiedlich beeinflusst.

Bevorzugt werden die ermittelte Querschnittsfläche und/oder der Kalibrierfaktor in einem digitalen Zwilling hinterlegt.

Die Aufgabe wird zudem gelöst durch ein Durchflussmessgerät, das mittels eines zuvor erläuterten Kalibrierverfahrens kalibriert wurde, und das dazu ausgebildet ist, in einem ersten Rohrabschnitt eines Rohrs einen Durchfluss eines Fluides durch das Rohr mittels eines ersten Messverfahrens zu ermitteln.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Figuren näher erläutert wird. Es zeigen:

FIG 1   ein Ablaufdiagramm eines erfindungsgemäßen Kalibrierverfahrens; und

FIG 2   eine Darstellung zweier Rohrabschnitte, um einen Kalibrierfaktor für ein in einem der beiden Rohabschnitte angeordnetes Durchflussmessgerät zu ermitteln.

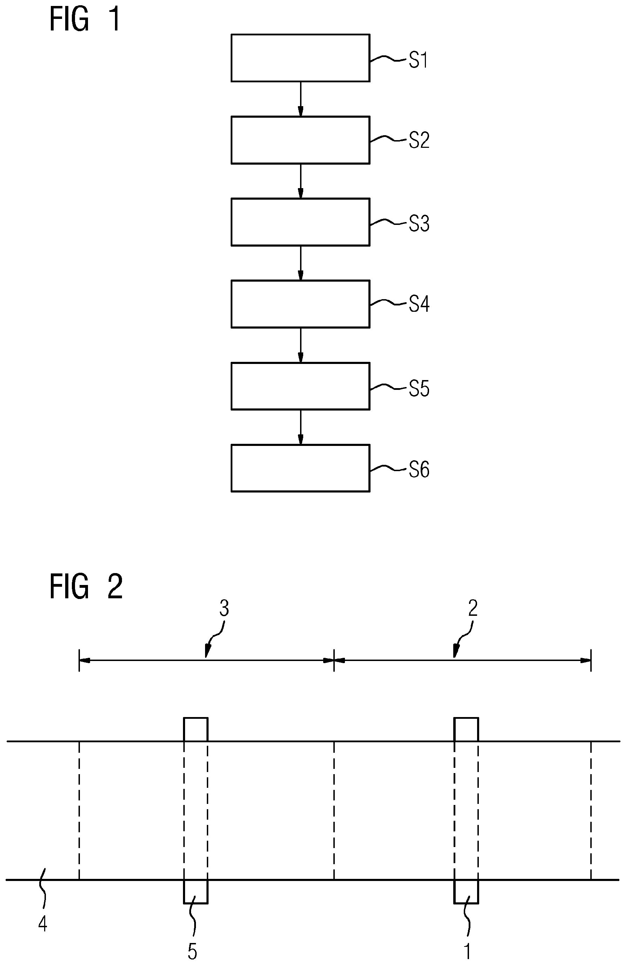

FIG 1 zeigt ein Ablaufdiagramm eines erfindungsgemäßen Kalibrierverfahrens zur Ermittlung eines Kalibrierfaktors zur Kalibrierung eines Durchflussmessgeräts 1, welches Durchflussmessgerät 1 dazu ausgebildet ist, in einem ersten Rohrabschnitt 2 eines Rohrs 4 einen Durchfluss eines Fluides durch das Rohr 4 mittels eines ersten Messverfahrens zu ermitteln.

In einem ersten Verfahrensschritt S1, der insbesondere bei Inbetriebnahme des Durchflussmessgeräts 1 innerhalb einer industriellen Anlage durchgeführt wird, werden der erste Rohrabschnitt 2 und ein an den ersten Rohrabschnitt 2 angrenzender zweiter Rohrabschnitt 3 des Rohrs 4 mit einem Fluid durchströmt. Dabei kann jedes beliebige Fluid verwendet werden, das üblicherweise in dem zu untersuchenden Durchflussmessgerät 1 Verwendung findet. Die einzelnen Rohrabschnitte 2, 3 sind in Figur 2 dargestellt.

Im Rahmen eines zweiten Verfahrensschritts S2 wird ein Durchfluss durch den ersten Rohrabschnitt 2 und den zweiten Rohrabschnitt 3 des Rohrs mittels eines Referenz- oder des Durchflussmessgeräts 1 bestimmt. Das Durchflussmessgerät 1 ist dabei dazu ausgebildet, auf Basis zum Beispiel eines Clamp-On Sensors oder einer magnetisch-induktiven einen Durchfluss durch den ersten Rohrabschnitt 2 zu bestimmen.

Die Ermittlung des Durchflusses stützt sich dabei auf eine aktuelle Werkskalibrierung der Referenzmessanordnung bzw. des Durchflussmessgeräts 1. Hierdurch ermittelt das Durchflussmessgerät 1 dabei den Durchfluss durch den ersten Rohrabschnitt 2. Dieser Durchfluss ist identisch mit dem Durchfluss durch den angrenzenden zweiten Rohrabschnitt 3.

Daran anschließend oder parallel dazu wird in einem dritten Schritt S3 eine Durchflussgeschwindigkeit durch den zweiten Rohrabschnitt 3 mittels einer von dem Durchflussmessgerät 1 bzw. der verschiedenen Messanordnung 5 bestimmt. Diese ist dazu ausgebildet, vorzugsweise auf Basis eines Clamp-On Sensors, eine Durchflussgeschwindigkeit durch den zweiten Rohrabschnitt 3 zu bestimmen.

In einem vierten Schritt S4 wird eine wirksame Querschnittsfläche des zweiten Rohrabschnitts 3 bzw. der Messanordnung 5 als Quotient aus dem mittels des Durchflussmessgeräts 1 ermittelten Durchfluss durch den ersten Rohrabschnitt 2 und den zweiten Rohrabschnitt 3 sowie der ermittelten Durchflussgeschwindigkeit in dem zweiten Rohrabschnitt 3 berechnet. Die Berechnung erfolgt gemäß dem folgenden Zusammenhang (wobei A eine Querschnittsfläche, v eine Durchflussgeschwindigkeit und F einen Durchfluss bezeichnet):

$$F\_Rohrabschnitt1 = F\_Rohrabschnitt2$$

$$A\_Rohrabschnitt2 = F\_Rohrabschnitt2/v\_Rohrabschnitt2$$

Ein Aus- und Wiedereinbau des Durchflussmessgeräts 1 entfällt dann, wenn das Durchflussmessgerät 1 bei seiner Inbetriebnahme als Referenz dient.

In einem fünften Verfahrensschritt S5 wird ein Vergleich des mittels der Messanordnung 5 ermittelten Durchflusses und einer Durchflussmessung des Durchflussmessgeräts 1 ein Kalibrierfaktor ermittelt, der zu Beginn des Verfahrens gleich eins ist.

Nach Ablauf einer vorherbestimmten Zeitdauer wird in einem sechsten Verfahrensschritt S6 der fünfte Verfahrensschritt S5 wiederholt durchgeführt und der Kalibrierfaktor entsprechend angepasst.

Obwohl die Erfindung im Detail durch das bevorzugte Ausführungsbeispiel näher illustriert und beschrieben wurde, so ist die Erfindung nicht durch das offenbarte Beispiel eingeschränkt, und andere Variationen können vom Fachmann hieraus abgeleitet werden, ohne den Schutzumfang der Erfindung zu verlassen.

**Patentansprüche**

1. Verfahren zur Ermittlung einer Querschnittsfläche eines zweiten Rohrabschnitts 3 eines Rohrs (4), wobei ein an den zweiten Rohrabschnitt 3 angrenzender erster Rohrabschnitt (2) des Rohrs (4) eine Referenzmessanordnung (1) aufweist, die dazu ausgebildet ist, einen Durchfluss durch den ersten Rohrabschnitt 2) und zweiten Rohrabschnitt (3) zu bestimmen, umfassend:

   a) Konstantes Durchströmen des ersten Rohrabschnitts (2) und des zweiten, an den ersten Rohrabschnitt (2) angrenzenden Rohrabschnitts (3) des Rohrs (4) mit einem Fluid;
   b) Bestimmung des Durchflusses durch den ersten Rohrabschnitt (2) und den zweiten Rohrabschnitt (3) des Rohrs (4) mittels der Referenzmessanordnung (1);
   c) Bestimmung einer Durchflussgeschwindigkeit durch den zweiten Rohrabschnitt (3) mittels einer von der Referenzmessanordnung (1) unabhängigen Messanordnung (5), die dazu ausgebildet ist, vorzugsweise auf Basis eines Clamp-On Sensors, eine Durchflussgeschwindigkeit durch den zweiten Rohrabschnitt (3) zu bestimmen;
   d) Berechnung einer Querschnittsfläche des zweiten Rohrabschnitts (3) als Quotient aus dem mittels der Referenzmessanordnung (1) ermittelten Durchfluss durch den ersten Rohrabschnitt (2) und der ermittelten Durchflussgeschwindigkeit in dem zweiten Rohrabschnitt (3).

2. Verfahren nach Anspruch 1, bei dem zur Anordnung der Referenzmessanordnung (1) in dem ersten Rohrabschnitt (2) der erste Rohrabschnitt (2) ausgebaut wird und die Referenzmessanordnung (1) in dem ersten Rohrabschnitt (2) eingebaut wird, und bei dem nach erfolgter Berechnung der Querschnittsfläche der erste Rohrabschnitt (2) mit der Referenzmessanordnung (1) ausgebaut wird und der an den zweiten Rohrabschnitt (3) angrenzende erste Rohrabschnitt (2) ohne die Referenzmessanordnung (1) anschließend wieder eingebaut wird.

3. Verfahren zur Ermittlung eines Kalibrierfaktors zur Kalibrierung eines Durchflussmessgeräts (1), welches Durchflussmessgerät (1) dazu ausgebildet ist, in einem ersten Rohrabschnitt (2) eines Rohrs (4) einen Durchfluss eines Fluides durch das Rohr (4) mittels eines ersten Messverfahrens zu ermitteln, umfassend:

   i) Ermittlung eines Durchflusses durch das Rohr (4) in einem zweiten, von dem ersten Rohrabschnitt (2) verschiedenen Rohrabschnitt (3) mittels einer Messanordnung (5), die dazu ausgebildet ist, mittels eines zweiten Messverfahrens auf Basis eines Clamp-On Sensors bei einer bekannten Querschnittsfläche des zweiten Rohrabschnitts (3) einen Durchfluss durch den zweiten Rohrabschnitt (3) zu bestimmen;
   ii) Ermittlung einer ersten Beziehung zwischen dem mittels des ersten Messverfahrens und des zweiten Messverfahrens bestimmten Durchflusses durch das Rohr (4), um einen ersten Kalibrierfaktor für das Durchflussmessgerät (1) zu erhalten.

4. Verfahren nach Anspruch 3, bei dem nach Ablauf einer vorherbestimmten Zeitdauer eine zweite Beziehung zwischen dem mittels des ersten Messverfahrens und des zweiten Messverfahrens bestimmten Durchfluss durch das Rohr (4) ermittelt wird, um einen zweiten Kalibrierfaktor für das Durchflussmessgerät (1) zu erhalten.

5. Verfahren nach Anspruch 3 oder 4, bei dem die Ermittlung des Durchflusses durch das Rohr (4) in dem zweiten Rohrabschnitt (3) gemäß dem Verfahrensschritt i) und die Ermittlung des ersten Kalibrierfaktors gemäß dem Verfahrensschritt ii) bei einer kundenseitigen Inbetriebnahme des Durchflussmessgerätes (1) oder bei einer Erstkalibrierung des Durchflussmessgeräts (1) erfolgt.

6. Verfahren nach einem der Ansprüche 3 bis 5, bei dem eine Querschnittsfläche der Messanordnung (5) und/oder des zweiten Rohrabschnitts (3) nach dem Verfahren gemäß Anspruch 1 oder 2 ermittelt wird, wobei das Durchflussmessgerät (1) vorzugsweise die Referenzmessanordnung (1) bildet.

7. Verfahren nach einem der Ansprüche 3 bis 5, bei dem eine Querschnittsfläche der Messanordnung (5) und/oder des zweiten Rohrabschnitts (3) in einem Inneren des zweiten Rohrabschnitts (3) ermittelt wird, vorzugsweise mittels eines Molches, der zu einer Abtastung einer Innenseite des zweiten Rohrabschnitts (3) ausgebildet ist, um hieraus die Querschnittsfläche der Messanordnung (5) und/oder des zweiten Rohrabschnitts (3) zu bestimmen.

8. Verfahren nach einem der Ansprüche 3 bis 5, umfassend:

   a) ein Außendurchmesser des zweiten Rohrabschnitts (1) wird mittels eines geeigneten Messgeräts ermittelt,

b) eine Wandstärke des Rohrs (4) in einem Bereich des zweiten Rohrabschnitts (3) wird ermittelt, insbesondere mittels einer Ultraschallmessung,

c) eine Querschnittsfläche der Messanordnung (5) und/oder des zweiten Rohrabschnitts (3) wird aus einer Differenz des Außendurchmessers und der Wandstärke des zweiten Rohrabschnitts (3) berechnet.

9. Verfahren nach einem der Ansprüche 3 bis 8, bei dem zusätzlich bei der Ermittlung der ersten Beziehung zwischen dem mittels des ersten Messverfahrens und des zweiten Messverfahrens bestimmten Durchflusses durch das Rohr (4) ein Druckwert in dem ersten Rohrabschnitt (2) und dem zweiten Rohrabschnitt (3) ermittelt wird, und bei dem zusätzlich bei der Ermittlung der zweiten Beziehung zwischen dem mittels des ersten Messverfahrens und des zweiten Messverfahrens bestimmten Durchflusses durch das Rohr (4) ein Druckwert in dem ersten und zweiten Rohrabschnitt erneut ermittelt wird, um hieraus mittels eines Vergleichs der Beziehungen zwischen den Druckwerten einen zusätzlichen Kalibrierfaktor zu bestimmen.

10. Verfahren nach einem der vorangegangenen Ansprüche, bei dem die ermittelte Querschnittsfläche und/oder der Kalibrierfaktor in einem digitalen Zwilling hinterlegt werden.

11. Durchflussmessgerät (1), das mittels eines Verfahrens gemäß einem der Ansprüche 3 bis 10 kalibriert wurde, und das dazu ausgebildet ist, in einem ersten Rohrabschnitt (2) eines Rohrs (4) einen Durchfluss eines Fluides durch das Rohr (4) mittels eines ersten Messverfahrens zu ermitteln.

FIG 1

```
┌──────────────┐
│              │～S1
└──────────────┘
       │
       ▼
┌──────────────┐
│              │～S2
└──────────────┘
       │
       ▼
┌──────────────┐
│              │～S3
└──────────────┘
       │
       ▼
┌──────────────┐
│              │～S4
└──────────────┘
       │
       ▼
┌──────────────┐
│              │～S5
└──────────────┘
       │
       ▼
┌──────────────┐
│              │～S6
└──────────────┘
```

FIG 2

**Europäisches Patentamt**
**European Patent Office**
**Office européen des brevets**

# EUROPÄISCHER RECHERCHENBERICHT

Nummer der Anmeldung

EP 18 17 4995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2009 059710 A1 (OPEN GRID EUROP GMBH [DE]) 22. Juni 2011 (2011-06-22) <br> * Abbildungen 1, 2, 3 * <br> * Absatz [0031] * <br> * Absatz [0033] * <br> ----- | 1,2,10 | INV. <br> G01F25/00 <br> G01F1/66 <br> G01B13/20 |
| A | CA 2 637 829 A1 (FRINDT TIMOTHY G [CA]) 6. Februar 2010 (2010-02-06) <br> * Seite 3, Zeile 7 - Zeile 16 * <br> ----- | 1,2,6,10 | |
| A | US 9 881 430 B1 (SHAH TAPAN [IN] ET AL) 30. Januar 2018 (2018-01-30) <br> * Spalte 3, Zeile 44 - Zeile 53 * <br> ----- | 10 | |
| A | CA 2 255 100 A1 (STANDARD AERO LTD [CA]) 13. September 1999 (1999-09-13) <br> * Zusammenfassung * <br> ----- | 1,2,10 | |
| A | US 2 994 218 A (OTTO FRENZL) 1. August 1961 (1961-08-01) <br> * Spalte 1, Zeile 43 - Zeile 61 * <br> ----- | 1,2 | RECHERCHIERTE SACHGEBIETE (IPC) |
| X | EP 2 607 864 A1 (ENDRESS & HAUSER MESSTECHNIK GMBH & CO KG [DE]) 26. Juni 2013 (2013-06-26) <br> * Abbildung 1 * <br> * Absatz [0026] * <br> * Absatz [0046] * <br> * Absatz [0049] * <br> * Absatz [0045] * <br> * Absatz [0064] * <br> * Absatz [0076] * <br> * Absatz [0080] * <br> * Absatz [0048] * <br> * Absatz [0057] - Absatz [0058] * <br> * Absatz [0050] - Absatz [0052] * <br> * Absatz [0047] * <br> * Absatz [0045] - Absatz [0057] * <br> ----- <br> -/-- | 3-9,11 | G01F <br> G01B |

Der vorliegende Recherchenbericht wurde für alle Patentansprüche erstellt

| Recherchenort | Abschlußdatum der Recherche | Prüfer |
|---|---|---|
| Den Haag | 21. Dezember 2018 | Régert, Tamás |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 18 17 4995

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2010 014693 B3 (BUNDESREP DEUTSCHLAND [DE]) 17. November 2011 (2011-11-17) * Absatz [0031] - Absatz [0035] * ----- | 9 | |
| A | WO 2012/078782 A1 (EXPRO METERS INC [US]; GYSLING DANIEL L [US]) 14. Juni 2012 (2012-06-14) * Absatz [0028] * ----- | 1-11 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 21. Dezember 2018 | Régert, Tamás |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
    Dokument

EPO FORM 1503 03.82 (P04C03)

Seite 2 von 2

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

**MANGELNDE EINHEITLICHKEIT
DER ERFINDUNG
ERGÄNZUNGSBLATT B**

**Nummer der Anmeldung**

EP 18 17 4995

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1, 2(vollständig); 10(teilweise)

   Ermittlung einer Querschnittfläche
   ---

2. Ansprüche: 3-9, 11(vollständig); 10(teilweise)

   Ermittlung eines Kalibrierfaktors
   ---

## ANHANG ZUM EUROPÄISCHEN RECHERCHENBERICHT
## ÜBER DIE EUROPÄISCHE PATENTANMELDUNG NR.

EP 18 17 4995

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-12-2018

| Im Recherchenbericht angeführtes Patentdokument | Datum der Veröffentlichung | Mitglied(er) der Patentfamilie | Datum der Veröffentlichung |
|---|---|---|---|
| DE 102009059710 A1 | 22-06-2011 | DE 102009059710 A1<br>EP 2366979 A1 | 22-06-2011<br>21-09-2011 |
| CA 2637829 A1 | 06-02-2010 | KEINE | |
| US 9881430 B1 | 30-01-2018 | KEINE | |
| CA 2255100 A1 | 13-09-1999 | AU 753256 B2<br>CA 2255100 A1<br>DE 19900339 A1<br>FR 2776069 A1<br>SG 72906 A1 | 10-10-2002<br>13-09-1999<br>16-09-1999<br>17-09-1999<br>23-05-2000 |
| US 2994218 A | 01-08-1961 | KEINE | |
| EP 2607864 A1 | 26-06-2013 | CN 104040299 A<br>EP 2607864 A1<br>US 2014352399 A1<br>WO 2013092245 A1 | 10-09-2014<br>26-06-2013<br>04-12-2014<br>27-06-2013 |
| DE 102010014693 B3 | 17-11-2011 | KEINE | |
| WO 2012078782 A1 | 14-06-2012 | AU 2011338394 A1<br>CA 2823688 A1<br>EP 2649418 A1<br>US 2012166125 A1<br>WO 2012078782 A1 | 18-07-2013<br>14-06-2012<br>16-10-2013<br>28-06-2012<br>14-06-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10328294 A1
- DE 19605652 A1